# EUROPEAN PATENT SPECIFICATION

(11) **EP 3 388 493 B1**
(45) Date of publication and mention of the grant of the patent: **21.10.2020**
(21) Application number: 16873073.7
(22) Date of filing: 08.12.2016
(51) Int. Cl.: C09D 183/04, B05D 7/14, B32B 27/00, C09D 5/16, C09D 101/28, C09D 105/00, C09D 171/02

(54) **COATING COMPOSITION FOR FORMING FRICTIONAL RESISTANCE-REDUCING COATING FILM, COATING FILM, AND SUBSTRATE WITH COATING FILM**
BESCHICHTUNGSZUSAMMENSETZUNG ZUR BILDUNG EINES REIBUNGSWIDERSTANDSREDUZIERENDEN BESCHICHTUNGSFILMS, BESCHICHTUNGSFILM UND SUBSTRAT MIT BESCHICHTUNGSFILM
COMPOSITION DE REVÊTEMENT PERMETTANT DE FORMER UN FILM DE REVÊTEMENT RÉDUISANT LA RÉSISTANCE AU FROTTEMENT, FILM DE REVÊTEMENT, ET SUBSTRAT AYANT UN FILM DE REVÊTEMENT

(30) Priority: 11.12.2015 JP 2015242588
(43) Date of publication of application: 17.10.2018
(73) Proprietor: Chugoku Marine Paints, Ltd., Hiroshima 739-0652 (JP); National Institute of Advanced Industrial Science and Technology, Tokyo 100-8921 (JP)
(72) Inventor: TANINO, Soichiro, Otake-shi Hiroshima 739-0652 (JP); SEKI, Yasuyuki, Otake-shi Hiroshima 739-0652 (JP); FUJIKI, Yutaka, Otake-shi Hiroshima 739-0652 (JP); NIIMOTO, Jyunji, Otake-shi Hiroshima 739-0652 (JP); TANAKA, Hideyuki, Otake-shi Hiroshima 739-0652 (JP); MASUDA, Mitsutoshi, Tsukuba-shi Ibaraki 305-8565 (JP)
(74) Representative: Hoffmann Eitle
(86) International application number: PCT/JP2016/086578
(87) International publication number: WO 2017/099180

(56) References cited:
- EP-A1- 2 896 671
- WO-A1-2014/084324
- WO-A1-2014/142035
- WO-A1-2016/009947
- JP-A- H09 279 061
- JP-A- 2001 342 432
- JP-A- 2003 253 214
- JP-A- 2012 007 048

## Description

### Technical Field

The present invention relates to a coating composition for forming a coating film capable of reducing frictional resistance, a coating film for reducing frictional resistance, which is formed by using the same, and a substrate with a coating film, which has the coating film on a substrate.

### Background Art

Like the case where a structure, such as a ship, etc., is propelled underwater, or the case where a liquid is transported through a tubular structure, such as a pipeline, etc., or the like, when friction is generated between the surface of the structure and the liquid, large energy is consumed by frictional resistance. As a method for reducing this frictional resistance, for example, there is exemplified a method utilizing a so-called Toms effect, in which a polymer compound, a fiber, or the like is added to the liquid, thereby inhibiting generation of a turbulent flow in the vicinity of the surface of the structure. As the method for reducing the frictional resistance utilizing this Toms effect, for example, PTL 1 proposes a coating material containing a water-soluble polymer, such as polyethylene oxide having a molecular weight of 1,000,000 or more, etc., in an amount of 20 to 100% by mass in the solid contents.

In addition, PTL 2 proposes a coating composition containing a water-soluble polymer and a resin having coating film renewal properties.

EP 2 896 671 A discloses a coating composition comprising: a platinum-curable polysiloxane; a hydrophilic polyanionic polymer, such as poly(2-acrylamide-2-methylpropane sulfonate), having a weight-average molecular weight of 20.000-1.000.000.

### Citation List

### Patent Literature

PTL 1: JP 11-343427 A
PTL 2: JP 2001-342432 A

### Summary of Invention

### Technical Problem

The coating material described in PTL 1 involved such a problem that in water, cracks are generated in the coating film or collapse of the coating film is generated since the hydrophilic polymer is swollen in the coating film. In addition, the coating material described in PTL 2 involved such a problem that since water is liable to enter into the interior of the coating film, the renewal properties in the surface layer of the coating film are hindered.

In the light of the above, though a lot of investigations regarding the frictional resistance reducing method utilizing the Toms effect have been made so far, it may not be said that satisfactory performances in practical use are exhibited. Thus, an improvement has been desired.

In view of the aforementioned conventional actual circumstance, the present invention has been made, and an object thereof is to provide a coating composition for forming a frictional resistance reducing coating film, which enables a structure to be propelled underwater, a structure disposed underwater, and so on, to have a thoroughly reduced frictional resistance generated between the surface of the structure and water and can form a coating film having excellent stability; and a frictional resistance reducing coating film prepared by curing the foregoing coating composition.

In addition, the present invention provides a substrate with a coating film, including the aforementioned frictional resistance reducing coating film on a substrate, and a method for producing the same.

### Solution to Problem

In order to solve the aforementioned problem, the present inventors made extensive and intensive investigations. As a result, it has been found that a coating film formed of a coating composition containing a curable organopolysiloxane and a hydrophilic polymer is able to have a thoroughly reduced frictional resistance generated due to contact with water and is also excellent in stability, thereby leading to accomplishment of the present invention.

The gist of the present invention is as follows.
[1] A coating composition for forming a frictional resistance reducing coating film, containing a curable organopolysiloxane (A) and at least one hydrophilic polymer (B) which has a weight average molecular weight (Mw) of 200,000 or more and is selected from the group consisting of a hydrophilic synthetic polymer (B1) and a hydrophilic naturally-derived polymer (B2), wherein the hydrophilic naturally-derived polymer (B2) is at least one selected from the group consisting of guar gum, tara gum, locust bean gum, xanthan gum, welan gum, diutan gum, γ-polyglutamic acid and salts thereof, hydroxypropyl cellulose (HPC), hydroxyethyl methyl cellulose (HEMC), hydroxypropyl methyl cellulose (HPMC), and carboxymethyl cellulose (CMC), and wherein the weight average molecular weight (Mw) of the hydrophilic synthetic polymer (B1) is 3,000,000 or more.
[2] The coating composition as set forth in the above [1], wherein the hydrophilic synthetic polymer (B1) is a homopolymer having a structural unit derived from one hydrophilic group-containing unsaturated monomer or a copolymer having structural units derived from two or more hydrophilic group-containing unsaturated monomers.
[3] The coating composition as set forth in the above [2], wherein the hydrophilic group-containing unsaturated monomer is at least one selected from the group consisting of a nonionic group-containing unsaturated monomer, an anionic group-containing unsaturated monomer, and a cationic group-containing unsaturated monomer.
[4] The coating composition as set forth in the above [1], wherein the hydrophilic synthetic polymer (B1) is polyethylene oxide.
[5] The coating composition as set forth in any of the above [1] to [4], wherein the weight average molecular weight (Mw) of the hydrophilic naturally-derived polymer (B2) is 500,000 or more.
[6] The coating composition as set forth in any of the above [1] to [5], wherein the content of the curable organopolysiloxane (A) in the coating composition is 30 to 70% by mass.
[7] The coating composition as set forth in any of the above [1] to [6], wherein the content of the hydrophilic polymer (B) in the solid contents of the coating composition is 5 to 40% by mass.
[8] The coating composition as set forth in any of the above [1] to [7], further containing an inorganic filler (C).
[9] The coating composition as set forth in the above [8], wherein the inorganic filler (C) is silica, and the silica is contained as a kneaded material with the curable organopolysiloxane (A).
[10] The coating composition as set forth in any of the above [1] to [9], further containing a silicone oil (D).
[11] The coating composition as set forth in any of the above [1] to [10], further containing an antifouling agent (E).
[12] A frictional resistance reducing coating film produced by curing the coating composition as set forth any of the above [1] to [11].
[13] A substrate with a coating film, including the frictional resistance reducing coating film as set forth in the above [12] on a substrate.

### Advantageous Effects of Invention

In accordance with the present invention, it is able to provide a coating composition for forming a frictional resistance reducing coating film, which enables a structure to be propelled underwater, a structure disposed underwater, and so on, to have a thoroughly reduced frictional resistance generated between the surface of the structure and water and can form a coating film having excellent stability; and a frictional resistance reducing coating film prepared by curing the foregoing coating composition.

In addition, in accordance with the present invention, it is able to provide a substrate with a coating film, including the aforementioned frictional resistance reducing coating film on a substrate, and a method for producing the same.

### Description of Embodiments

### [Coating Composition for Forming Frictional Resistance Reducing Coating Film]

The coating composition for forming a frictional resistance reducing coating film of the present invention is one containing a curable organopolysiloxane (A) and at least one hydrophilic polymer (B) which has a weight average molecular weight (Mw) of 200,000 or more and is selected from a hydrophilic synthetic polymer (B1) and a hydrophilic naturally-derived polymer (B2), wherein the hydrophilic naturally-derived polymer (B2) is at least one selected from the group consisting of guar gum, tara gum, locust bean gum, xanthan gum, welan gum, diutan gum, γ-polyglutamic acid and salts thereof, hydroxypropyl cellulose (HPC), hydroxyethyl methyl cellulose (HEMC), hydroxypropyl methyl cellulose (HPMC), and carboxymethyl cellulose (CMC), and wherein the weight average molecular weight (Mw) of the hydrophilic synthetic polymer (B1) is 3,000,000 or more.

### <Curable Organopolysiloxane (A)>

In the present invention, for the purpose of reducing the frictional resistance, an organopolysiloxane (A) is used.

Examples of the organopolysiloxane (A) which is used in the present invention include those having reactive groups in the molecule and forming a three-dimensional crosslinking structure upon a reaction of the reactive groups with each other, or a reaction of the reactive groups with a reactive group of an organosilicon crosslinking agent (F) as described later, thereby being cured. Examples of the reaction of the reactive groups include a condensation reaction and an addition reaction, and examples of the condensation reaction include a dealcoholization reaction, a deoximation reaction, a deacetonation reaction, and the like.

As the curable organopolysiloxane (A) having reactive groups, those capable of forming a silicone rubber at the time of curing are preferred, and for example, a compound represented by the following formula (I) is preferred.

R¹₍₃₋ᵣ₎R²ᵣSi-O-(SiR¹₂O)ₚ-SiR¹₍₃₋ᵣ₎R²ᵣ (I)

In the formula (I), R^{1'}s each independently represent a hydrogen atom, or an alkyl group, an alkenyl group, an aryl group, an aralkyl group, or a halogenated alkyl group, each having a carbon atom number of 1 to 16; R^{2'}s each independently represent a hydroxy group or a hydrolyzable group; r represents an integer of 1 to 3; and p represents 10 to 10,000.

In the formula (I), R^{1'}s each independently represent a hydrogen atom, an alkyl group, an alkenyl group, an aryl group, an aralkyl group, or a halogenated alkyl group, each having a carbon atom number of 1 to 16.

Examples of the alkyl group having a carbon atom number of 1 to 16 in R¹ include a methyl group, an ethyl group, a propyl group, a butyl group, a pentyl group, a hexyl group, a heptyl group, and the like.

Examples of the alkenyl group having a carbon atom number of 1 to 16 in R¹ include a vinyl group, an allyl group, a propenyl group, an isopropenyl group, a butenyl group, an isobutenyl group, a pentenyl group, a heptenyl group, a hexenyl group, a cyclohexenyl group, and the like.

As the aryl group having a carbon atom number of 1 to 16 in R¹, an aryl group having a carbon atom number of 6 to 16 is preferred, and examples thereof include a phenyl group, a tolyl group, a xylyl group, a naphthyl group, and the like.

As the aralkyl group having a carbon atom number of 1 to 16 in R¹, an aralkyl group having a carbon atom number of 7 to 16 is preferred, and examples thereof include a benzyl group, a 2-phenylethyl group, a 2-naphthylethyl group, a diphenylmethyl group, and the like.

Examples of the halogenated alkyl group having a carbon atom number of 1 to 16 in R¹ include groups formed by substituting a part or all of the hydrogen atoms contained in the aforementioned alkyl group with a halogen atom, such as a fluorine atom, a chlorine atom, a bromine atom, an iodine atom, etc.

Among those, R¹ in the formula (I) is preferably an alkyl group, an alkenyl group, or an aryl group, more preferably a methyl group, an ethyl group, a vinyl group, or a phenyl group, and still more preferably a methyl group or a vinyl group.

In the formula (I), R^{2'}s each independently represent a hydroxy group or a hydrolyzable group.

Examples of the hydrolyzable group in R² include an oxime group, an acyloxy group, an alkoxy group, an alkenyloxy group, an amino group, an amide group, an aminooxy group, and the like.

As the oxime group in R², an oxime group having a carbon atom number of 1 to 10 is preferred, and examples thereof include dimethyl ketoxime, methyl ethyl ketoxime, diethyl ketoxime, methyl isopropyl ketoxime, and the like.

As the acyloxy group in R², an aliphatic acyloxy group having a carbon atom number of 1 to 10 or an aromatic acyloxy group having a carbon atom number of 6 to 12 is preferred, and examples thereof include an acetyloxy group, a propionyloxy group, a butyroyloxy group, a benzoyloxy group, and the like.

As the alkoxy group in R², an alkoxy group having a carbon atom number of 1 to 10 is preferred. In the alkoxy group in R², one or more oxygen atoms may exist among one or more carbon atoms.

Specific examples of the alkoxy group in R² include a methoxy group, an ethoxy group, a propoxy group, a butoxy group, a methoxyethoxy group, an ethoxyethoxy group, and the like.

As the alkenyloxy group in R², an alkenyloxy group having a carbon atom number of 3 to 10 is preferred, and examples thereof include an isopropenyloxy group, an isobutenyloxy group, a 1-ethyl-2-methylvinyloxy group, and the like.

As the amino group in R², an amino group having a carbon atom number of 1 to 10 is preferred, and examples thereof include an N-methylamino group, an N-ethylamino group, an N-propylamino group, an N-butylamino group, an N,N-dimethylamino group, an N,N-diethylamino group, a cyclohexylamino group, and the like.

As the amide group in R², an amide group having a carbon atom number of 2 to 10 is preferred, and examples thereof include an N-methylacetamide group, an N-ethylacetamide group, an N-methylbenzamide group, and the like.

As the aminooxy group in R², an aminooxy group having a carbon atom number of 2 to 10 is preferred, and examples thereof include an N,N-dimethylaminooxy group, an N,N-diethylaminooxy group, and the like.

Among those, R² in the formula (I) is preferably a hydroxy group, an oxime group, or an alkoxy group, more preferably a hydroxy group or an oxime group, and still more preferably a hydroxy group or a 2-methylethyl ketoxime group.

As a combination of R¹ and R² in the formula (I), a combination in which R¹ is an alkyl group, an alkenyl group, or an aryl group, and R² is a hydroxy group, an oxime group, an alkoxy group is preferred; a combination in which R¹ is a methyl group, an ethyl group, a vinyl group, or a phenyl group, and R² is a hydroxy group or an oxime group is more preferred; a combination in which R¹ is a methyl group or a vinyl group, and R² is a hydroxy group or a 2-methylethyl ketoxime group is still more preferred; and a combination in which R¹ is a methyl group, and R² is a hydroxy group, or a combination in which R¹ is a vinyl group, and R² is a 2-methylethyl ketoxime group is yet still more preferred.

In the formula (I), r is an integer of 1 to 3.

In the case where R² is a hydroxy group, r is preferably 1, and in the case where R² is a substituent other than a hydroxy group, r is preferably 2.

In the formula (I), p represents 10 to 10,000, and preferably 100 to 1,000, and p can be properly adjusted so as to satisfy the following weight average molecular weight.

From the viewpoint of improving the workability at the time of producing the coating composition and from the viewpoint of improving the spray atomizability and curability of the coating composition and the strength of the coating film formed, the weight average molecular weight of the curable organopolysiloxane (A) is preferably 500 or more, more preferably 5,000 or more, still more preferably 10,000 or more, yet still more preferably 15,000 or more, and most preferably 20,000 or more, and it is preferably 1,000,000 or less, more preferably 100,000 or less, still more preferably 50,000 or less, and yet still more preferably 40,000 or less.

From the viewpoint of improving the workability at the time of producing the coating composition and from the viewpoint of improving the spray atomizability and curability of the coating composition and the strength of the coating film formed, the viscosity of the curable organopolysiloxane (A) at 23°C is preferably 20 mPa·s or more, more preferably 100 mPa·s or more, and still more preferably 500 mPa·s or more, and it is preferably 100,000 mPa·s or less, more preferably 10,000 mPa·s or less, and still more preferably 5,000 mPa·s or less.

In the present specification, the viscosity of the curable organopolysiloxane (A) at 23°C refers to a viscosity measured with a B-type rotary viscometer.

From the viewpoint of improving the coating film strength, the content of the curable organopolysiloxane (A) in the coating composition is preferably 10% by mass or more, more preferably 20% by mass or more, still more preferably 30% by mass or more, and yet still more preferably 32% by mass or more, and it is preferably 90% by mass or less, more preferably 80% by mass or less, still more preferably 70% by mass or less, yet still more preferably 65% by mass or less, and even yet still more preferably 60% by mass or less.

As the curable organopolysiloxane (A), commercially available products can be used. Examples of the commercially available product include "DMS-S35", manufactured by Gelest, Inc., "KE-445", manufactured by Shin-Etsu Chemical Co., Ltd., and the like. In addition, as the curable organopolysiloxane (A), those described in JP 2001-139816 A can also be used.

### <Hydrophilic Polymer (B)>

In the present invention, for the purpose of reducing the frictional resistance, at least one hydrophilic polymer (B), which has a weight average molecular weight (Mw) of 200,000 or more and is selected from a hydrophilic synthetic polymer (B1) and a hydrophilic naturally-derived polymer (B2), is used.

In the present invention, the curable organopolysiloxane (A) and the hydrophilic polymer (B) are used in combination, and therefore, it is conjectured that the hydrophilic polymer (B) in water moves from the interior of the coating film to the surface of the coating film due to a difference in polarity between the both, development of a turbulent flow vortex in the vicinity of the coating film can be inhibited, and therefore, the frictional resistance in water is reduced.

The "hydrophilic polymer" in the present invention refers to a polymer compound having at least one hydrophilic group, such as a hydroxy group, an amino group, an amide group, an alkoxy group, an ether group (inclusive of an alkylene oxide unit), a carboxy group, an ester group, a sulfonic acid group, a quaternary ammonium salt group, etc., in the molecule.

The hydrophilic polymer (B) in the present invention is at least one selected from the hydrophilic synthetic polymer (B1) and the hydrophilic naturally-derived polymer (B2).

### [Hydrophilic Synthetic Polymer (B1)]

Examples of the hydrophilic synthetic polymer (B1) include a hydrophilic group-containing vinyl-based polymer, a polyalkylene oxide, a polyester-based polymer, and the like. Among those, a hydrophilic group-containing vinyl-based polymer and a polyalkylene oxide are preferred. The hydrophilic synthetic polymer (B1) may be used either alone or in combination of two or more thereof.

### (Hydrophilic Group-Containing Vinyl-Based Polymer)

Examples of the hydrophilic group-containing vinyl-based polymer include a polymer having a structural unit derived from a hydrophilic group-containing unsaturated monomer containing at least one hydrophilic group.

Examples of the hydrophilic group-containing unsaturated monomer include a nonionic group-containing unsaturated monomer, an anionic group-containing unsaturated monomer, a cationic group-containing unsaturated monomer, and the like.

Examples of the nonionic group-containing unsaturated monomer include hydroxy group-, amide group-, or ether group-containing (meth)acrylates, such as (meth)acrylamide, hydroxyethyl (meth)acrylate, polyethylene glycol mono(meth)acrylate, methoxy polyethylene glycol mono(meth)acrylate, etc., and the like.

In the present specification, the term "(meth)acrylamide" is an expression meaning "acrylamide or methacrylamide", and other analogous expressions have the same meanings.

Examples of the anionic group-containing unsaturated monomer include carboxy group-containing unsaturated monomers, such as (meth)acrylic acid, maleic acid, maleic anhydride, itaconic acid, crotonic acid, etc.; and sulfonic acid group-containing unsaturated monomers, such as styrenesulfonic acid, 3-(methacryloyloxy)propanesulfonic acid, acrylamidopropanesulfonic acid, etc.

The anionic group-containing unsaturated monomer may be partially or fully neutralized and used. The monomer may be neutralized as it stands, or it may be formed into a polymer and then neutralized.

Examples of a base which is used for the neutralization include alkali metal hydroxides, such as potassium hydroxide, sodium hydroxide, etc.; and amine compounds, such as ammonia, triethanolamine, trimethylamine, etc.

As the cationic unsaturated monomer, at least one selected from an amino group-containing unsaturated monomer and a quaternary ammonium salt group-containing unsaturated monomer is exemplified.

Examples of the amino group-containing unsaturated monomer include N,N-dimethylaminoethyl (meth)acrylate, N,N-diethylaminoethyl (meth)acrylate, N,N-dimethylaminopropyl (meth)acrylate, N,N-diethylaminopropyl (meth)acrylate, N,N-dimethylaminoethyl (meth)acrylamide, N,N-diethylaminoethyl (meth)acrylamide, N,N-dimethylaminopropyl (meth)acrylamide, N,N-diethylaminopropyl (meth)acrylamide, 2-vinylpyridine, 4-vinylpyridine, and structures prepared by subjecting these monomers to neutralization with an acid represented by H⁺X⁻.

Examples of the quaternary ammonium salt group-containing unsaturated monomer include (meth)acryloyloxyethyl trimethylammonium, (meth)acryloyloxypropyl trimethylammonium, (meth)acryloylaminoethyl trimethylammonium, (meth)acryloylaminopropyl trimethylammonium, diallyldimethylammonium, 1-ethyl-4-vinylpyridinium, and 1,2-dimethyl-5-vinylpyridinium, each having X⁻ as a counter ion; and the like.

X⁻ represents an anion, and it is preferably a halide ion, and more preferably a chloride ion.

The hydrophilic synthetic polymer (B1) in the present invention may be a homopolymer having one structural unit derived from a hydrophilic group-containing unsaturated monomer and may also be a copolymer having structural units derived from two or more hydrophilic group-containing unsaturated monomers.

As the hydrophilic group-containing unsaturated monomer in the present invention, at least one selected from a nonionic group-containing unsaturated monomer, an anionic group-containing unsaturated monomer, and a cationic group-containing unsaturated monomer is preferred; at least one selected from a nonionic group-containing unsaturated monomer and an anionic group-containing unsaturated monomer is more preferred; and at least one selected from acrylamide, and acrylic acid and a salt thereof is still more preferred.

The terms "at least one selected from a nonionic group-containing unsaturated monomer, an anionic group-containing unsaturated monomer, and a cationic group-containing monomer" mean, for example, "at least one selected from a nonionic group-containing unsaturated monomer", "at least one selected from an anionic group-containing unsaturated monomer", or "at least one selected from a cationic group-containing unsaturated monomer" and also mean "a mixture of at least one selected from a nonionic group-containing unsaturated monomer and at least one selected from an anionic group-containing unsaturated monomer", "a mixture of at least one selected from a nonionic group-containing unsaturated monomer and at least one selected from a cationic group-containing unsaturated monomer", or the like.

In the case where the hydrophilic polymer (B) is a copolymer of a nonionic group-containing unsaturated monomer and an anionic group-containing unsaturated monomer, a mass ratio of the nonionic group-containing unsaturated monomer to the anionic group-containing unsaturated monomer [nonionic/anionic] is preferably 40/60 to 90/10, more preferably 50/50 to 80/20, and still more preferably 55/45 to 75/25. The aforementioned mass ratio [nonionic/anionic] can be calculated from a charge ratio of the monomers on producing the copolymer.

Furthermore, the hydrophilic synthetic polymer (B1) may also be a copolymer of the hydrophilic group-containing unsaturated monomer and other monomer than that.

Examples of the other monomer include aromatic vinyl compounds, such as styrene, 2-methylstyrene, 3-methylstyrene, 4-methylstyrene, 2,4-dimethylstyrene, 4-tert-butylstyrene, 5-tert-butyl-2-methylstyrene, etc.

In addition, examples thereof include (meth)acrylic acid alkyl esters, such as methyl (meth)acrylate, ethyl (meth)acrylate, propyl (meth)acrylate, butyl (meth)acrylate, pentyl (meth)acrylate, 2-ethylhexyl (meth)acrylate, isooctyl (meth)acrylate, n-octyl (meth)acrylate, etc.

In the case where the hydrophilic synthetic polymer (B1) contains a structural unit derived from the other monomer, its content is preferably 30% by mass or less, more preferably 20% by mass or less, and still more preferably 10% by mass or less.

### (Polyalkylene Oxide)

Examples of the polyalkylene oxide which is used as the hydrophilic synthetic polymer (B1) include polyethylene oxide (PEO) and a polyethylene oxide-polypropylene oxide copolymer (PEO-PPO). Among those, polyethylene oxide is preferred.

As the hydrophilic synthetic polymer (B1), commercially available products can be used. Examples of the commercially available product include "Polyacrylamide" and "Poly(acrylamide-acrylic acid) Copolymer", all of which are manufactured by Polysciences, Inc.; "PEO18" (PEO), manufactured by Sumitomo Seika Chemicals Co., Ltd.; "ALKOX EP-10" (PEO-PPO) and "ALKOX EP-20" (PEO-PPO), all of which are manufactured by Meisei Chemical Works, Ltd.; and the like.

### [Hydrophilic Naturally-Derived Polymer (B2)]

The hydrophilic naturally-derived polymer (B2) in the present invention refers to a polymer derived from animals and plants, or a compound obtained through chemical modification of such a polymer and is at least one selected from the group consisting of guar gum, tara gum, locust bean gum (carob bean gum), xanthan gum, welan gum, diutan gum, γ-polyglutamic acid or a salt thereof, hydroxypropyl cellulose (HPC), hydroxyethylmethyl cellulose (HEMC), hydroxypropylmethyl cellulose (HPMC), and carboxymethyl cellulose (CMC). The hydrophilic naturally-derived polymer (B2) may be used either alone or in combination of two or more thereof.

Among those, guar gum, xanthan gum, diutan gum, hydroxyethylmethyl cellulose (HEMC), and hydroxypropylmethyl cellulose (HPMC) are preferred.

Though the hydrophilic polymer (B) may be either a solid or a liquid at 23°C, it is preferably a solid at 23°C.

In the case where the hydrophilic polymer (B) is a solid at 23°C, from the viewpoint of improving the workability at the time of producing the coating composition, coating workability, and the smoothness of the resulting coating film, its average particle diameter is preferably 0.01 µm or more, and more preferably 0.1 µm or more, and it is preferably 200 µm or less, more preferably 100 µm or less, and still more preferably 50 µm or less. The average particle diameter of the hydrophilic polymer (B) refers to a 50% diameter (median diameter) and can be measured by the method described in the section of Examples.

As for the average particle diameter of the hydrophilic polymer (B) which is used in the present invention, it is preferred that the hydrophilic polymer (B) has the aforementioned average particle diameter either before blending into the coating composition or in the coating composition. That is, from the viewpoint of inhibiting an increase of the viscosity of the coating composition, it is preferred that the hydrophilic polymer (B) is low in solubility in the curable organopolysiloxane (A) or does not have solubility therein.

From the viewpoint of reducing the frictional resistance, the weight average molecular weight (Mw) of the hydrophilic polymer (B) is 200,000 or more, preferably 500,000 or more, more preferably 1,000,000 or more, and still more preferably 2,500,000 or more, and it is preferably 100,000,000 or less, more preferably 20,000,000 or less, still more preferably 15,000,000 or less, and yet still more preferably 12,000,000 or less.

In the present specification, the "weight average molecular weight", and the "number average molecular weight" and "Z average molecular weight" as described later refer to those measured by the gel permeation chromatography (GPC)".

In particular, from the viewpoint of reducing the frictional resistance, the weight average molecular weight (Mw) of the hydrophilic synthetic polymer (B1) is 3,000,000 or more, preferably 3,500,000 or more, and more preferably 4,000,000 or more, and it is preferably 100,000,000 or less, more preferably 20,000,000 or less, still more preferably 15,000,000 or less, and yet still more preferably 12,000,000 or less.

From the viewpoint of reducing the frictional resistance, the weight average molecular weight (Mw) of the hydrophilic naturally-derived polymer (B2) is 200,000 or more, preferably 500,000 or more, more preferably 600,000 or more, and still more preferably 700,000 or more, and it is preferably 100,000,000 or less, more preferably 30,000,000 or less, and still more preferably 25,000,000 or less.

In general, a ratio of the weight average molecular weight (Mw) to the number average molecular weight (Mn) of the hydrophilic polymer (B) [Mw/Mn] is preferably 1 to 10. From the viewpoint of reducing the frictional resistance, the number average molecular weight (Mn) of the hydrophilic polymer (B) is preferably 20,000 or more, more preferably 100,000 or more, still more preferably 300,000 or more, yet still more preferably 500,000 or more, even yet still more preferably 1,000, 000 or more, even still more preferably 2,000,000 or more, and even still more further preferably 3,000,000 or more, and it is preferably 100,000,000 or less, more preferably 50,000,000 or less, still more preferably 20,000,000 or less, yet still more preferably 10,000,000 or less, and even yet still more preferably 8,000,000 or less.

In general, a ratio of the Z average molecular weight (Mz) to the weight average molecular weight (Mw) of the hydrophilic polymer (B) [Mz/Mw] is preferably 1 to 10. From the viewpoint of reducing the frictional resistance, the Z average molecular weight (Mz) of the hydrophilic polymer (B) is preferably 300,000 or more, more preferably 1,000,000 or more, and still more preferably 2,000,000 or more, and it is preferably 1,000,000,000 or less, more preferably 500,000,000 or less, still more preferably 250,000,000 or less, yet still more preferably 100,000,000 or less, even yet still more preferably 50,000,000 or less, and even still more preferably 25,000,000 or less.

From the viewpoint of reducing the frictional resistance, the viscosity average molecular weight (Mv) of the hydrophilic polymer (B) is preferably 100,000 or more, and more preferably 1,000,000 or more, and it is preferably 100,000,000 or less.

In the present specification, the "viscosity average molecular weight (Mv)" refers to a value measured in conformity of JIS-K-7367 by adopting the viscosity method as prescribed in JIS-K-2283 or JIS-Z-8803.

The hydrophilic polymer (B) may form an aggregate in the coating composition, in the coating film, or in water, and the molecular weight of this aggregate may fall within the aforementioned range.

The content of the hydrophilic polymer (B) in the coating composition is preferably 0.3% by mass or more, more preferably 1% by mass or more, and still more preferably 3% by mass or more, and it is preferably 70% by mass or less, more preferably 40% by mass or less, still more preferably 30% by mass or less, and yet still more preferably 25% by mass or less.

From the viewpoint of reducing the frictional resistance and from the viewpoint of improving the coating film strength, the content of the hydrophilic polymer (B) in the solid contents of the coating composition is preferably 1% by mass or more, more preferably 2% by mass or more, still more preferably 5% by mass or more, and yet still more preferably 7% by mass or more, and it is preferably 80% by mass or less, more preferably 60% by mass or less, still more preferably 40% by mass or less, and yet still more preferably 35% by mass or less.

In the present specification, the term "solid contents of the coating composition" refers to a component from which an organic solvent (K) as described later and a volatile component to be contained as a solvent in each component have been excluded, and the "content in the solid contents of the coating composition" can be calculated as the content in the solid contents obtained by drying the coating composition in a hot air dryer at 125°C for 1 hour.

### <Optional Ingredients>

The coating composition for forming a frictional resistance reducing coating film of the present invention may contain, in addition to the curable organopolysiloxane (A) and the hydrophilic polymer (B), an inorganic filler (C), a silicone oil (D), an antifouling agent (E), an organosilicon crosslinking agent (F), a curing catalyst (G), a dehydrating agent (H), a coloring pigment (I), an extender pigment (J), an organic solvent (K), an anti-sagging and anti-settling agent (L), a silane coupling agent (M), other coating film forming component (N), a flame retardant (O), a heat conductivity improving agent (P), or the like, as the need arises.

### [Inorganic Filler (C)]

In the present invention, for the purpose of improving the fluidity and thixotropy of the coating composition, an inorganic filler (C) may be contained.

In the case where the coating composition of the present invention contains the inorganic filler (C), the fluidity and thixotropy of the coating composition become favorable as described above, and even against a vertical coating surface or the like, a coating film having a sufficient thickness can be formed by a small number of coats. Furthermore, physical properties of the resulting coating film, such as hardness, tensile strength, elongation, etc., are improved with a well balance.

Examples of the inorganic filler (C) include silica, mica, calcium carbonate, aluminum carbonate, aluminum oxide, titanium oxide, aluminum hydroxide, aluminum silicate, magnesium silicate, a glass short fiber, and the like. The inorganic filler (C) can be used either alone or in combination of two or more thereof.

Among those, silica is preferred as the inorganic filler (C) from the viewpoint of improving physical properties of the coating film, such as hardness, tensile strength, elongation, etc., with a well balance.

As the silica, for example, a hydrophilic silica (surface-untreated silica), such as a wet-process silica (hydrated silica), a dry-process silica (fumed silica or anhydrous silica), etc., can be used. In addition, a hydrophobic silica prepared by subjecting a surface of the aforementioned silica to hydrophobization treatment, specifically a hydrophobic wet-process silica, a hydrophobic fumed silica, etc., can also be used. The silica can be used either alone or in combination of two or more thereof.

Though the aforementioned wet-process silica is not particularly limited, for example, a wet-process silica in which an adsorption moisture content is 4 to 8% by mass, a bulk density is 200 to 300 g/L, a primary particle diameter is 10 to 30 µm, and a specific surface area (BET surface area) is 10 m²/g or more is preferred.

Though the aforementioned dry-process silica is not particularly limited, for example, a dry-process silica in which a moisture content is 1.5% by mass or less, a bulk density is 50 to 100 g/L, a primary particle diameter is 8 to 20 µm, and a specific surface area is 10 m²/g or more is preferred.

Examples of the hydrophobic fumed silica include those prepared by subjecting a dry-process silica to surface treatment with an organosilicon compound, such as methyltrichlorosilane, dimethyldichlorosilane, hexamethyldisilazane, hexamethylcyclotrisiloxane, octamethylcyclotetrasiloxane, etc. The hydrophobic fumed silica has a small water adsorption with time, and its moisture content is typically 0.3% by mass or less, and in many cases, it is 0.1 to 0.2% by mass.

Though the hydrophobic fumed silica is not particularly limited, for example, a hydrophobic fumed silica in which a primary particle diameter is 5 to 50 µm, a bulk density is 50 to 100 g/L, and a specific surface area is 10 m²/g or more is preferred. In the case where the hydrophobic fumed silica is subjected to heat treatment as described later, the moisture adsorbed on a surface of the hydrophobic fumed silica after the heat treatment is occasionally decreased. In that case, the moisture content of the hydrophobic fumed silica is typically 0.2% by mass or less, preferably 0.1% by mass or less, and more preferably 0.05 to 0.1% by mass.

As the silica, commercially available products can be used. Examples of the commercially available product include "R974" and "RX200", all of which are manufactured by Nippon Aerosil Co., Ltd., and the like. In addition, as the silica, those described in JP 2001-139816 A can also be used.

The silica may be formed into a heat-treated product prepared by previously performing heat treatment together with the curable organopolysiloxane (A). When the silica is previously heat-treated with a part or the whole of the curable organopolysiloxane (A), an affinity between the both components is improved, whereby effects, such as inhibition of aggregation of the silica, etc., can be obtained.

As a method for heat-treating the silica and the curable organopolysiloxane (A), for example, there is exemplified a method in which the treatment is performed under normal or reduced pressure preferably at 100°C or higher and not higher than a decomposition temperature of the blending components, more preferably at 100 to 300°C, and still more preferably at 140 to 200°C, usually for 3 to 30 hours.

The silica may be blended in the coating composition as a kneaded material prepared by kneading together with the curable organopolysiloxane (A). By using the kneaded material prepared by kneading the curable organopolysiloxane (A) and the silica, an increase of the viscosity of the coating composition can be inhibited.

As a method for producing the kneaded material of the silica and the curable organopolysiloxane (A), for example, there can be exemplified a method described in JP 2004-182908 A.

From the viewpoint of improving the workability at the time of producing the coating composition and from the viewpoint of improving the spray atomizability and curability of the coating composition and the strength of the coating film formed, the viscosity of the kneaded material of the silica and the curable organopolysiloxane (A) at 23°C is preferably 1 Pa·s or more, and more preferably 3 Pa·s or more, and it is preferably 2,000 Pa·s or less, and more preferably 1,200 Pa·s or less.

In the present specification, the viscosity of the kneaded material of the silica and the curable organopolysiloxane (A) at 23°C refers to a viscosity measured with a B-type rotary viscometer.

In the case where the coating composition of the present invention contains the inorganic filler (C), from the viewpoint of improving the thixotropy of the coating composition and from the viewpoint of improving the coating film strength and the coating film hardness, the amount of the inorganic filler (C) is preferably 0.5 parts by mass or more, more preferably 1 part by mass or more, still more preferably 2 parts by mass or more, yet still more preferably 3 parts by mass or more, even yet still more preferably 4 parts by mass or more, even still more preferably 5 parts by mass or more, even still more further preferably 6 parts by mass or more, and even yet still more further preferably 7 parts by mass or more based on 100 parts by mass of the curable organopolysiloxane (A); and from the viewpoint of inhibiting an increase of the viscosity of the coating composition, it is preferably 100 parts by mass or less, more preferably 50 parts by mass or less, and still more preferably 20 parts by mass or less.

### [Silicone Oil (D)]

In the present invention, for the purpose of reducing the frictional resistance, a silicone oil (D) may be used.

The silicone oil (D) is preferably a silicone oil represented by the following formula (II).

R³-(SiR³₂-O)ₗ-(SiR³₂-(R⁴O)ₘ)ₙ-R³ (II)

In the formula (II), R^{3'}s each independently represent an alkyl group, an alkenyl group, an aryl group, or a halogenated alkyl group, each having a carbon atom number of 1 to 20 and optionally having a hetero atom in the chain; R⁴ represents a divalent hydrocarbon group having a carbon atom number of 1 to 20, in which an amino group, an ether group, a thioether group, an ester group, or an amide group may be intervened; 1 represents an integer of 10 to 1,000; m represents 0 or an integer of 1 or more; and n represents an integer of 1 or more.

From the viewpoint of improving the workability at the time of producing the coating composition and from the viewpoint of improving the spray atomizability and curability of the coating composition and the strength of the coating film formed, the viscosity at 23°C of the silicone oil (D) is preferably 10 mPa·s or more, more preferably 20 mPa·s or more, still more preferably 40 mPa·s or more, yet still more preferably 60 mPa·s or more, and even yet still more preferably 80 mPa·s or less, and it is preferably 10,000 mPa·s or less, more preferably 5,000 mPa·s or less, and still more preferably 4,000 mPa·s or less.

In the present specification, the viscosity of the silicone oil (D) at 23°C refers to a viscosity measured with a B-type rotary viscometer.

In the case where the coating composition of the present invention contains the silicone oil (D), from the viewpoint of reducing the frictional resistance, the amount of the silicone oil (D) is preferably 0.1 parts by mass or more, more preferably 10 parts by mass or more, still more preferably 20 parts by mass or more, and yet still more preferably 25 parts by mass or more, and it is preferably 1,000 parts by mass or less, more preferably 100 parts by mass or less, still more preferably 70 parts by mass or less, yet still more preferably 50 parts by mass or less, and even yet still more preferably 40 parts by mass or less, based on 100 parts by mass of the hydrophilic polymer (B).

As the silicone oil (D), commercially available products can be used. Examples of the commercially available product include "FZ-2160", manufactured by Dow Corning Toray Co., Ltd., "X-22-4272", manufactured by Shin-Etsu Chemical Co., Ltd., and the like.

### [Antifouling Agent (E)]

In the present invention, for the purpose of improving the antifouling properties of the coating film, an antifouling agent (E) may be used.

Examples of the antifouling agent (E) include cuprous oxide, copper thiocyanate, copper, copper pyrithione, zinc pyrithione, 4-bromo-2-(4-chlorophenyl)-5-(trifluoromethyl)-1H-pyrrole-3-carbonitrile, 4,5-dichloro-2-n-octyl-4-isothiazolin-3-one, a borane-nitrogen-based base adduct (e.g., pyridine triphenylborane, 4-isopropylpyridine diphenylmethylborane, etc.), (±)-4-(1-(2,3-dimethylphenyl)ethyl]-1H-imidazole, N,N-dimethyl-N'-(3,4-dichlorophenyl)urea, N-(2,4,6-trichlorohenyl)maleimide, 2-methylthio-4-tert-butylamino-6-cyclopropylamino-1,3,5-triazine, 2,4,5,6-tetrachloroisophthalonitrile, bisdimethyldithiocarbamoyl zinc ethylene bisdithiocarbamate, chloromethyl-n-octyldisulfide, N,N-dimethyl-N'-phenyl-(N'-fluorodichloromethylthio)sulfamide, a tetraalkylthiuram disulfide, zinc dimethyldithiocarbamate, zinc ethylenebisdithiocarbamate, 2,3-dichloro-N-(2',6'-diethylphenyl)maleimide, 2,3-dichloro-N-(2'-ethyl-6'-methylphenyl)maleimide, and the like. The antifouling agent (E) may be used either alone or in combination of two or more thereof.

Among those, cuprous oxide, copper thiocyanate, copper, copper pyrithione, zinc pyrithione, 4-bromo-2-(4-chlorophenyl)-5-(trifluoromethyl)-1H-pyrrole-3-carbonitrile, 4,5-dichloro-2-n-octyl-4-isothiazolin-3-one, and a borane-nitrogen-based base adduct (e.g., pyridine triphenylborane, 4-isopropylpyridine diphenylmethylborane, etc.) are preferred, and copper pyrithione is more preferred.

In the case where the coating composition of the present invention contains the antifouling agent (E), from the viewpoint of improving the antifouling properties of the coating film, the content of the antifouling agent (E) in the solid contents of the coating composition is preferably 0.05 to 50% by mass, and more preferably 1 to 30% by mass.

### [Organosilicon Crosslinking Agent (F)]

In the present invention, for the purpose of improving the curability of the frictional resistance reducing coating film and the film strength, an organosilicon crosslinking agent (F) may be used.

The organosilicon crosslinking agent (F) is preferably a compound represented by the following formula (III) and/or a partially hydrolyzed condensate thereof.

R⁵_{d}SiY_{(4-d)} (III)

In the formula (III), R⁵ each independently represents a hydrocarbon group having a carbon atom number of 1 to 6; Y's each independently represent a hydrolyzable group; and d represents an integer of 0 to 2.

In the formula (III), R⁵ each independently represents a hydrocarbon group having a carbon atom number of 1 to 6. Specific examples of the hydrocarbon group having a carbon atom number of 1 to 6 in R⁵ include a linear or branched alkyl group, such as a methyl group, an ethyl group, a propyl group, etc.; a cyclic alkyl group, such as a cyclohexyl group, etc.; an alkenyl group, such as a vinyl group, etc., and an aryl group, such as a phenyl group, etc. Among those, a methyl group and an ethyl group are preferred.

In the formula (III), Y's each independently represent a hydrolyzable group. Examples of the hydrolyzable group in Y include the hydrolyzable groups exemplified in the formula (I). Among those, an alkoxy group and an oxime group are preferred, and a methoxy group and an ethoxy group are preferred.

d represents an integer of 0 to 2, and from the viewpoint of improving the curability of the frictional resistance reducing coating film and the film strength, d is preferably 0.

As the organosilicon crosslinking agent (F), commercially available products can be used. As for the commercially available product, examples of tetraethyl orthosilicate include "Ethyl Silicate 28", manufactured by Colocoat Co., Ltd. and "Ethyl Orthosilicate", manufactured by Tama Chemicals Co., Ltd. Examples of the partially hydrolyzed condensate of tetraethyl orthosilicate include "Silicate 40", manufactured by Tama Chemicals Co., Ltd. and "TES 40 WN", manufactured by Wacker Asahikasei Silicone Co., Ltd. Examples of an alkyl trialkoxysilane include "KBM-13", manufactured by Shin-Etsu Chemical Co., Ltd., and the like.

In the case where the coating composition of the present invention contains the organosilicon crosslinking agent (F), from the viewpoint of adjusting the curing rate of the coating composition and from the viewpoint of improving the coating film strength, the content of the organosilicon crosslinking agent (F) in the solid contents of the coating composition is preferably 0.2 to 20% by mass, and more preferably 0.4 to 10% by mass.

### [Curing Catalyst (G)]

In the present invention, for the purposes of improving the curing rate of the coating film and improving the coating film strength, a curing catalyst (G) may be used.

As the curing catalyst (G), for example, curing catalysts described in JP 4-106156 A may be exemplified.

Specifically, examples thereof include
tin carboxylates, such as tin naphthenate, tin oleate, etc.;
tin compounds, such as dibutyltin diacetate, dibutyltin acetoacetonate, dibutyltin dilaurate, dibutyltin dioleate, dibutyltin oxide, dibutyltin dimethoxide, dibutyltin dipentanoate, dibutyltin dioctoate, dibutyltin dineodecanoate, dioctyltin dineodecanoate, bis(dibutyltin laurate)oxide, dibutyl bis(triethoxysiloxy)tin, bis(dibutyltin acetate)oxide, dibutyltin bis(ethyl maleate), dioctyltin bis(ethyl maleate), etc.;
titanate esters or titanium chelate compounds, such as tetraisopropoxytitanium, tetra-n-butoxytitanium, tetrakis(2-ethylhexoxy)titanium, dipropoxy bis(acetylacetonate)titanium, titanium isopropoxyoctyl glycol, etc.;
organometallic compounds, such as zinc naphthenate, zinc stearate, zinc-2-ethyloctoate, iron-2-ethylhexoate, cobalt-2-ethylhexoate, manganese-2-ethylhexoate, cobalt naphthenate, alkoxy aluminum compounds, etc.;
lower fatty acid salts, such as potassium acetate, sodium acetate, lithium oxalate, etc.; and the like.

As the curing catalyst (G), commercially available products can be used. Examples of the commercially available product include "NEOSTANN U-100", manufactured by Nitto Kasei Co., Ltd., "Gleck TL", manufactured by DIC Corporation, and the like.

In the case where the coating composition of the present invention contains the curing catalyst (G), from the viewpoint of bettering a balance between the curing rate of the coating film and the pot life after preparation of the coating composition, the content of the curing catalyst (G) in the coating composition is preferably 0.001% by mass or more, and more preferably 0.01% by mass or more, and it is preferably 10% by mass or less, and more preferably 1% by mass or less.

### [Dehydrating Agent (H)]

In the present invention, for the purpose of improving the storage stability of the coating composition, a dehydrating agent (H) may be used.

As the hydrating agent (H), for example, zeolite which is known as a general name "molecular sieve", alumina, ortho esters, such as an alkyl orthoformate, etc., orthoboric acid, isocyanates, and the like can be used. The dehydrating agent may be used either alone or in combination of two or more thereof.

In the case where the coating composition of the present invention contains the dehydrating agent (H), from the viewpoint of improving the storage stability of the coating composition and from the viewpoint of inhibiting a defect, such as secondary aggregation of the hydrophilic polymer (B), etc., the content of the dehydrating agent (H) in the coating composition is preferably 0.1% by mass or more, and more preferably 0.5% by mass or more, and it is preferably 10% by mass or less, and more preferably 5% by mass or less.

### [Coloring Pigment (I)]

In the present invention, for the purpose of improving the designability of the coating composition and the coating film, a coloring pigment (I) may be used.

Examples of the coloring pigment (I) include inorganic pigments, such as carbon black, red oxide, titanium white (titanium oxide), yellow iron oxide, etc.; and organic pigments, such as Naphthol Red, Phthalocyanine Blue, etc. In the coloring pigment, various coloring agents, such as dyes, etc., may further be contained.

The coloring pigment (I) may be used either alone or in combination of two or more thereof.

In the case where the coating composition of the present invention contains the coloring pigment (I), the content of the coloring pigment (I) in the solid contents of the coating composition is typically 0.5 to 10% by mass.

In the case where the coating composition of the present invention contains, as the coloring pigment (I), the same component as the component used as the inorganic filler (C), it should be construed that the subject component is not included in the coloring pigment (I).

### [Extender Pigment (J)]

In the present invention, for the purpose of improving the designability and visibility of the coating composition or the coating film, an extender pigment (J) may be used. The extender pigment (J) as referred to in the present specification refers to a pigment which has a small refractive index and when kneaded with an oil or a varnish, is so transparent that the coated surface is not hided.

Examples of the extender pigment (J) include talc, mica, clay, potassium feldspar, zinc oxide, calcium carbonate, kaolin, alumina white, white carbon, aluminum hydroxide, magnesium carbonate, barium carbonate, barium sulfate, calcium sulfate, zinc sulfide, and the like. The extender pigment (J) may be used either alone or in combination of two or more thereof.

Among those, zinc oxide, talc, mica, clay, calcium carbonate, kaolin, barium sulfate, calcium sulfate, and potassium feldspar are preferred.

In the case where the coating composition of the present invention contains the extender pigment (J), the content of the extender pigment (J) in the solid contents of the coating composition is typically 1 to 50% by mass.

In the case where the coating composition of the present invention contains, as the extender pigment (J), the same component as the component used as the inorganic filler (C), it should be construed that the subject component is not included in the extender pigment (J).

### [Organic Solvent (K)]

In the present invention, for the purpose of keeping the viscosity of the coating composition low to improve the spray atomizability, thereby improving the coating workability, an organic solvent (K) may be used.

Examples of the organic solvent (K) may include an aromatic hydrocarbon-based organic solvent, an aliphatic hydrocarbon-based organic solvent, an alicyclic hydrocarbon-based organic solvent, a ketone-based organic solvent, and an ester-based organic solvent. Among those, an aromatic hydrocarbon-based organic solvent and a ketone-based organic solvent are preferred.

Examples of the aromatic hydrocarbon-based organic solvent include toluene, xylene, mesitylene, and the like.

Examples of the aliphatic hydrocarbon-based organic solvent include pentane, hexane, heptane, octane, and the like.

Examples of the alicyclic hydrocarbon-based organic solvent include cyclohexane, methyl cyclohexane, ethyl cyclohexane, and the like.

Examples of the ketone-based organic solvent include acetyl acetone, acetone, methyl ethyl ketone, methyl isobutyl ketone, dimethyl carbonate, and the like.

Examples of the ester-based organic solvent include propylene glycol monomethyl ether acetate and the like.

The organic solvent (K) may be used either alone or in combination of two or more thereof.

In the case where the coating composition of the present invention contains the organic solvent (K), though the content of the organic solvent (K) in the coating composition can be properly adjusted according to the viscosity of the coating composition, it is preferably 1% by mass or more, more preferably 10% by mass or more, still more preferably 20% by mass or more, and yet still more preferably 25% by mass or more, and from the viewpoint of inhibiting sagging at the time of coating, it is preferably 70% by mass or less, and more preferably 40% by mass or less.

### [Anti-Sagging and Anti-Settling Agent (L)]

In the present invention, an anti-sagging and anti-settling agent (L) may be used.

Examples of the anti-sagging and anti-settling agent (L) include an organic clay-based wax (e.g., stearate salts, lecithin salts and alkylsulfonic acid salts and the like of Al, Ca, or Zn), an organic wax (e.g., a polyethylene wax, an oxidized polyethylene wax, an amide wax, a polyamide wax, a hydrogenated castor oil wax, etc.), a mixture of an organic clay-based wax and an organic wax, and the like.

As the anti-sagging and anti-settling agent (L), commercially available products can be used. Examples of the commercially available product include "DISPARLON 305", "DISPARLON 4200-20", and "DISPARLON A630-20X", all of which are manufactured by Kusumoto Chemicals, Ltd., and the like.

In the case where the coating composition of the present invention contains the anti-sagging and anti-settling agent (L), the content of the anti-sagging and anti-settling agent (L) in the coating composition is typically 0.01 to 10% by mass, and preferably 0.1 to 3% by mass.

### [Silane Coupling Agent (M)]

As the silane coupling agent (M), for example, a compound represented by the following formula (IV) is preferably used.

(R⁶O)_{w}R⁷_{(3-w)}Si-R⁸-Z (IV)

In the formula (IV), R⁶ and R⁷ each independently represent an alkyl group, an alkenyl group, an aryl group, or a halogenated alkyl group, each having a carbon atom number of 1 to 10; R⁸ represents a divalent hydrocarbon group having a carbon atom number of 1 to 20, in which an amino group, an ether group, a thioether group, an ester group, or an amide group may be intervened; Z represents a polar group; and w represents an integer of 2 or 3.

As the alkyl group, the alkenyl group, the aryl group, or the halogenated alkyl group in R⁶ and R⁷ of the aforementioned formula (IV), an alkyl group is preferred, and a methyl group or an ethyl group is more preferred.

R⁸ of the aforementioned formula (IV) is preferably an alkylene group having a carbon atom number of 4 to 11, in which an amino group is intervened.

Z in the aforementioned formula (IV) is preferably an amino group, an imino group, a glycidyl group, an isocyanate group, a thiol group, a hydrosilyl group, or a (meth)acryl group, and more preferably an amino group.

w in the aforementioned formula (IV) is preferably 3.

Examples of the silane coupling agent (M) include 3-(2-aminoethylamino)propyltrimethoxysilane, 3-aminopropyltrimethoxysilane, 3-aminopropyltriethoxysilane, 3-(2-(2-aminoethyl)aminoethylamino)propyltrimethoxysilane, 3-glycidoxypropyltrimethoxysilane, 3-isocyanatopropyltrimethoxysilane, 3-mercaptopropyltrimethoxysilane, N-phenylpropyltrimethoxysilane, and the like, and partially hydrolyzed condensates thereof may also be used.

The silane coupling agent (M) may be used either alone or in combination of two or more thereof.

In the case where the coating composition of the present invention contains the silane coupling agent (M), from the viewpoint of improving the adhesive property to the substrate or undercoating film, the content of the silane coupling agent (M) in the solid contents of the coating composition is typically 0.01 to 10% by mass, and preferably 0.05 to 2% by mass.

### [Other Coating Film Forming Component (N)]

The coating composition of the present invention can contain, as other coating film forming component (N), a coating film forming component other than the curable organopolysiloxane (A) that is a main resin component within a range where the object of the present invention is not impaired.

Examples of the other coating film forming component (N) include sparingly water-soluble or water-insoluble resins, such as an acrylic resin, an acrylic silicone resin, an unsaturated polyester resin, a fluorocarbon resin, a polybutene resin, a urethane resin (rubber), a polyamide resin, a vinyl chloride-based copolymer resin, a chlorinated rubber (resin), a chlorinated olefin resin, a styrene-butadiene copolymer resin, an ethylene-vinyl acetate copolymer resin, a vinyl chloride resin, an alkyd resin, a chroman resin, a petroleum resin, etc.

The weight average molecular weight of the resin which is used as the other coating film forming component (N) is preferably 100,000 or less.

### [Flame Retardant (O)]

The coating composition of the present invention may contain a flame retardant (O). Examples of the flame retardant (O) include antimony oxide, an oxidized paraffin, and the like.

### [Heat Conductivity Improving Agent (P)]

The coating composition of the present invention may contain a heat conductivity improving agent (P). Examples of the heat conductivity improving agent (P) include boron nitride, aluminum oxide, and the like.

### <Kit of Coating Composition>

The coating composition of the present invention may be formed as a one-pack type coating material composed of a single component, or may also be formed as a multi-pack type coating material composed of two or more components.

In the case of a multi-pack type coating material, it is preferred that the respective components (respective liquids) each contain one or plural components, are individually packed, and then stored and kept in a state of being charged in a container, such as a can, etc., and by mixing the contents of the respective components at the time of coating, the coating composition can be prepared.

In the case of a multi-pack type coating material, it is preferred that the coating material is constituted of two components of a "main agent component" containing the curable organopolysiloxane (A) constituting a main body of a binder resin of the coating composition and a "curing agent component" containing a compound which reacts with the curable polyorganosiloxane (A) to form a crosslinking structure. Taking into consideration reactivity, denaturation, or the like of an optional ingredient, a component called "optional ingredient component (additive component)", etc. may be additionally contained. That is, the coating composition of the present invention may be, for example, a two-pack type coating material constituted of the main agent component and the curing agent component, or may also be a three-pack type coating material constituted of the main agent component, the curing agent component, and the additive component.

### [Frictional Resistance Reducing Coating Film]

The coating composition of the present invention is used for forming a frictional resistance reducing coating film. That is, the frictional resistance reducing coating film of the present invention is one prepared by curing the coating composition of the present invention. Specifically, the frictional resistance reducing coating film can be, for example, obtained by applying the coating composition of the present invention onto a substrate or the like, followed by curing.

Examples of a method for applying the coating composition of the present invention may include known methods, such as a method using a brush, a roller, or a spray, etc.

The coating film can be, for example, obtained through curing by allowing the coating composition applied by the aforementioned method to stand under a condition at 25°C for about 0.5 to 3 days. On curing the coating composition, the curing may be performed while blowing air under heating.

For example, from the viewpoint of improving the coating film strength and from the viewpoint of reducing the frictional resistance, the thickness of the frictional resistance reducing coating film after curing is preferably about 100 to 2,000 µm. Examples of a method for producing the frictional resistance reducing coating film having such a thickness include a method in which the coating composition is applied in a thickness per one application of typically 30 to 400 µm, and preferably 50 to 300 µm one time or plural times.

### [Substrate with Coating Film and Its Production Method]

The substrate with a coating film according to the present invention is one having the frictional resistance reducing coating film of the present invention on a substrate.

The substrate with a coating film of the present invention can be, for example, produced by a method for producing a substrate with a coating film including a step (1) of applying the coating composition on a substrate or impregnating a substrate with the coating composition to obtain an applied body or impregnated body; and a step (2) of curing the applied body or impregnated body.

In the aforementioned step (1), as a method for applying the coating composition on the substrate, the aforementioned application method can be adopted. In addition, a method for performing the impregnation is not particularly limited, the impregnation can be performed by dipping the substrate in the coating composition being in an amount sufficient for impregnation. Furthermore, a method for curing the aforementioned applied body or impregnated body is not particularly limited, and the curing can be performed by the same method as the method on producing the frictional resistance reducing coating film.

The substrate with a coating film of the present invention can also be produced by a method for producing a substrate with a coating film including a step (i) of forming a coating film by using the coating composition; and a step (ii) of attaching the coating film on a substrate.

In the step (i), a method for forming a coating film is not particularly limited, and the coating film can be produced by the same method as the method on producing the frictional resistance reducing coating film.

In the step (ii), a method for attaching the coating film on a substrate is not particularly limited, and the coating film can be attached by, for example, a method described in JP 2013-129724 A.

Examples of the substrate include ships (for example, ship's hulls of large steel vessels, such as container ships, tankers, etc., fishing boats, FRP boats, wooden boats, yachts, etc.; and new ships or repaired ships thereof), fishery materials (for example, ropes, fishing nets, fishing gears, floats, buoys, etc.), oil pipelines, water conduit piping, circulation water tubes, diver suits, swimming goggles, oxygen cylinders, swim suits, torpedoes, underwater structures of water supply and drainage ports of thermal or nuclear power plants, sea water utilization equipment (for example, sea water pumps, etc.), Mega floats, gulf roads, undersea tunnels, port facilities, various marine civil engineering structures for canals, waterways, etc., and the like.

The substrate may be one in which any coating film is already formed on the surface thereof. That is, the coating composition of the present invention may be applied on the surface of a substrate in which a rust-preventive or an undercoating material (undercoat), such as a primer, etc., is previously applied.

Furthermore, overcoating may be performed on the surface in which coating with other coating material is performed, or on the surface on which the coating composition of the present invention is already coated.

### [Frictional Resistance Reducing Method and Fuel Consumption Suppression Method]

The coating film prepared by curing the coating composition for forming a frictional resistance reducing coating film of the present invention is able to thoroughly reduce the frictional resistance generated between the surface of the coating film and water and is excellent in stability, and therefore, when provided on the surface of a ship or the like, the frictional resistance generated between the surface of the ship or the like and water can be reduced, thereby enabling the fuel consumption of the ship or the like to be improved.

That is, in accordance with the present invention, it is also possible to provide a method for reducing the frictional resistance by covering the aforementioned coating film on a substrate and a method for suppressing the fuel consumption by covering the aforementioned coating film on a substrate.

### Examples

The present invention is hereunder more specifically described based on Examples, but it should be construed that the present invention is by no means limited to these Examples.

Hereinafter, the curable organopolysiloxane (A), the hydrophilic polymer (B), and the inorganic filler (silica) (C) are occasionally expressed as the "component (A)", the "component (B)", and the component (C), respectively.

### [Coating Composition]

### • Blending Components:

The blending components which are used for the coating composition are shown in Tables 1 to 3, and the characteristics of the hydrophilic polymer (B) are shown in Table 4.

The kneaded materials of the curable organopolysiloxane (A) and the inorganic filler (silica) (C) are those obtained by using the curable organopolysiloxane (A) and the inorganic filler (silica) (C) in amounts shown in Table 1 and kneading by the aforementioned known method.

**Table 1**

| | | Compound name | Chemical formula, characteristics, production company, etc. |
|---|---|---|---|
| (A) | Curable organopolysiloxane | Silanol group-containing organopolysiloxane | HO-[Si(CH₃)₂-O-]ₙ-H |
| | | | Weight average molecular weight = 28,500 |
| | | Oxime silyl group-containing organopolysiloxane [*1] | (MEKO)₂(CH₂=CH-)SiO-[Si(CH₃)₂-O-]ₙ-Si(CH=CH₂)(MEKO)₂ |
| | | | Weight average molecular weight = 35,000 |
| (C) | Silica | Surface-untreated silica | "AEROSIL 200", manufactured by Nippon Aerosil Co., Ltd. |
| | | Hydrophobic-treated silica | "AEROSIL RX200", manufactured by Nippon Aerosil Co., Ltd. |
| Kneaded material (1) of (A) and (C) | | Kneaded product of silanol group-containing organopolysiloxane and hydrophobic-treated silica | |
| | | Amount of component (C) based on 100 parts by mass of component (A) = 10 parts by mass, viscosity (at 23°C) = 5,000 mPa-s | |
| Kneaded material (2) of (A) and (C) | | Kneaded product of oxime group-containing organopolysiloxane and surface-untreated silica | |
| | | Amount of component (C) based on 100 parts by mass of component (A) = 10 parts by mass, viscosity (at 23°C) = 40 Pa·s | |
| Kneaded material (3) of (A) and (C) | | Kneaded product of oxime group-containing organopolysiloxane and hydrophobic-treated silica | |
| | | Amount of component (C) based on 100 parts by mass of component (A) = 10 parts by mass, viscosity (at 23°C) = 800 Pa·s | |

| | | | |
|---|---|---|---|
| *1: "MEKO" represents a "2-methylethyl ketoxime group". | | | |

**Table 2**

| | | Compound name | Chemical formula, characteristics, production company, etc. |
|---|---|---|---|
| (B) | Hydrophilic polymer | Poly(acrylamide/acrylic acid) sodium salt (1) | "Poly(acrylamide/acrylic acid), Na salt", manufactured by Polysciences, Inc. |
| | | | Acrylamide/acrylic acid = 60/40 (mass ratio) |
| | | Poly(acrylamide/acrylic acid) sodium salt (2) | "Poly(acrylamide/acrylic acid), Na salt", manufactured by Polysciences, Inc. |
| | | | Acrylamide/acrylic acid = 70/30 (mass ratio) |
| | | Polyacrylamide | "Polyacrylamide", manufactured by Polysciences, Inc. |
| | | Polyethylene oxide (1-1) | "PEO18F", manufactured by Sumitomo Seika Chemicals Co., Ltd. |
| | | Polyethylene oxide (1-2) | "ALKOX EP-10", manufactured by Meisei Chemical Works, Ltd. |
| | | | Ethylene oxide/propylene oxide = 12/1 |
| | | Polyethylene oxide (1-3) | "ALKOX EP-20", manufactured by Meisei Chemical Works, Ltd. |
| | | | Ethylene oxide/propylene oxide = 6/1 |
| | | Diutan gum | "KELCO-CRETE DG-F", manufactured by Sansho Co., Ltd. |
| | | Guar gum | "SUPERGEL CSA200/50", manufactured by Sansho Co., Ltd. |
| (B') | Polyethylene oxide (2) | | "ALKOX L-8", manufactured by Meisei Chemical Works, Ltd. |

**Table 3**

| | | Compound name | Chemical formula, characteristics, production company, etc. |
|---|---|---|---|
| (D) | Silicone oil | Ether-modified organopolysiloxane | "KF-6020", manufactured by Shin-Etsu Chemical Co., Ltd. |
| | | Phenyl-modified organopolysiloxane | "KF-50-3,000CS", manufactured by Shin-Etsu Chemical Co., Ltd. |
| | | | Ratio of phenyl modification = 5%, viscosity (at 23°C) = 3,000 mPa·s |
| (E) | Antifouling agent | Copper pyrithione | "Copper Omadine Powder", manufactured by Arch UK Biocides Ltd. |
| | | | Cu(-S-C₅H₄N-O-)₂ |
| (F) | Organosilicon crosslinking agent | Organosilane partially hydrolyzed condensate | "WACKER SILICATE TES 40 WN", manufactured by Wacker Asahikasei Silicone Co., Ltd. |
| | | | H₅C₂O-[Si(OC₂H₅)₂-O-]ₜ-C₂H₅ |
| (G) | Curing catalyst | Dibutyltin dilaurate | "Gleck TL", manufactured by DIC Corporation |
| (J) | Extender pigment | Zinc oxide | "Zinc Oxide #3", manufactured by Hakusui Tech Co., Ltd. |
| | | Talc | "TTK Talc", manufactured by Takehara Kagaku Kogyo Co., Ltd. |
| (K) | Organic solvent | Xylene | - |
| | | Acetyl acetone | - |
| (L) | Anti-sagging and anti-settling agent | Amide wax | "DISPARLON A630-20X", manufactured by Kusumoto Chemicals, Ltd. |
| (M) | Silane coupling agent | 3-(2-Aminoethylamino)propyltrimethoxysilane | "KBM-603", manufactured by Shin-Etsu Chemical Co., Ltd. |
| (N) | Other coating film forming component | Acrylic resin | "Palaloid B-66", manufactured by Rohm and Haas Company |

**Table 4**

| | | Average molecular weight (*1) | | | Mw/Mn | Mz/Mw | Presence or absence of pre-treatment (*2) | Average particle diameter D50 (µm) (*3) |
|---|---|---|---|---|---|---|---|---|
| | | Weight average molecular weight (Mw) [× 10⁶] | Number average molecular weight (Mn) [× 10⁶] | Z average molecular weight (Mz) [× 10⁶] | | | | |
| (B) | Poly(acrylamide/acrylic acid) sodium salt (1) | 5.47 | 4.53 | 7.53 | 1.21 | 1.38 | Yes | 17.2 |
| | Poly(acrylamide/acrylic acid) sodium salt (2) | 9.35 | 6.18 | 18.77 | 1.51 | 2.01 | Yes | 7.1 |
| | Polyacrylamide | 5.01 | 1.97 | 8.14 | 2.54 | 1.63 | Yes | 18.3 |
| | Polyethylene oxide (1-1) | 2.32 | 0.96 | 2.95 | 2.43 | 1.27 | Yes | 18.2 |
| | Polyethylene oxide (1-2) | 0.99 | 0.53 | 1.20 | 1.87 | 1.21 | Yes | 19.2 |
| | Polyethylene oxide (1-3) | 0.67 | 0.38 | 1.01 | 1.76 | 1.51 | Yes | 17.5 |
| | Diutan gum | 0.85 | 0.84 | 0.87 | 1.02 | 1.02 | Yes | 40.3 |
| | Guar gum | 2.39 | 1.66 | 3.03 | 1.44 | 1.27 | No | 79.8 |
| (B') | Polyethylene oxide (2) | 0.11 | 0.09 | 0.21 | 1.20 | 1.94 | Yes | - |

| | | | | | | | | |
|---|---|---|---|---|---|---|---|---|
| The remarks in Table 4 are as follows. *1: The measurement of each of the average molecular weights was performed by GPC-MALS. For the separation, "OHpak SB-806HQ", manufactured by Showa Denko K.K. was used. As a differential refractive index detector, "RID20A", manufactured by Shimadzu Corporation was used, and as a light scattering detector, "DAWN HELEOSII", manufactured by Wyatt Technology Corporation was used. The measurement was performed by using a 50 mM sodium nitrate aqueous solution as an eluent under conditions at a flow rate of 0.8 mL/min and at a column temperature of 40°C. *2: For the pre-treatment, pulverization was performed with a jet mill, and classification was performed with a mesh having an opening of 38 microns. *3: The average particle diameter is a 50% diameter (median diameter) as measured with "SALD-2200", manufactured by Shimadzu Corporation in a dry process. | | | | | | | | |

### [Examples 1 to 8 and 12 to 14, Reference Examples 9 to 11 and Comparative Examples 1 to 4]

### . Production of Coating Composition:

Respective components were mixed and stirred according to the blending amounts (mass parts) shown in Tables 5 to 7, thereby preparing one-pack type coating compositions composed of only a main agent component, and multi-pack type coating compositions composed of a main agent component, a curing agent component, and an additive component.

In the case of applying the multi-pack type coating composition, the components of the respective components were thoroughly stirred and mixed with a disperser such that the mixture became uniform.

### [Production of Test Cylinder with Coating Film]

On the outer surface of a vinyl chloride resin-made cylinder having a diameter of 310 mm, an epoxy-based anticorrosive coating material ("BANNOH 500", manufactured by Chugoku Marine Paints, Ltd.) was applied as an undercoat coating material 1 in a dry thickness of 100 µm, and on the coating film obtained after drying, a silicone-based coating material ("CMP BIOCLEAN TIE COAT", manufactured by Chugoku Marine Paints, Ltd.) was applied as an undercoat coating material 2 in a dry thickness of 100 µm, followed by drying to form an undercoat laminated coating film.

Subsequently, the coating composition of each of the Examples and Comparative Examples was coated on this undercoat laminated coating film in a dry thickness of 100 µm at normal temperature by using a spray coating machine. One day after lapse of time at normal temperature, a test cylinder with a coating film was provided.

### [Evaluation of Frictional Resistance]

The frictional resistance of the coating film was evaluated with a double cylinder type resistance measuring apparatus. The double cylinder type resistance measuring apparatus is one configured of two inner and outer cylinders, in which the inner cylinder having the coating film of a targeted sample for measurement formed on the outer surface thereof is set in the outer cylinder filled with artificial sea water, and a torque stress applied to the inner cylinder on generating a rotating water flow by rotating the outer cylinder is measured.

The test cylinder with a coating film of each of the Examples and Comparative Examples was used as this inner cylinder, the measured torque stress was compared with a standard torque stress obtained by using a non-coated inner cylinder, and a proportion of the reduction was expressed as a frictional resistance reduction ratio (%). The results are shown in Tables 5 to 7.

The larger the value of the frictional resistance reduction ratio (%), the higher the frictional resistance reduction effect by the coating film is.

The measurement was carried out at a temperature of 23°C by setting a rotational rate of the outer cylinder at 400 rpm under a speed condition such that the water flow speed on the test coating film is mathematically corresponding to about 10 knots.

### [Evaluation of Coating Film State]

At the time of rotating the test cylinder with a coating film of each of the Examples and Comparative Examples in sea water at 23°C for one week under a rotating water flow corresponding to 10 knots, the coating film state was confirmed through visional inspection. The case where any change from the state before the test was not found was evaluated as "normal", whereas the case where a defect, such as cracks, etc., was found was evaluated as "abnormal". The results are shown in Tables 5 to 7.

**Table 5**

| | | | Example | | | | | | |
|---|---|---|---|---|---|---|---|---|---|
| | | | 1 | 2 | 3 | 4 | 5 | 6 | 7 |
| | (A) | Silanol group-containing organopolysiloxane | | | | | | | 55.0 |
| | (A) & (C) | Silanol group-containing organopolysiloxane/ hydrophobic-treated silica kneaded material (1) | 60.0 | 60.0 | 60.0 | 60.0 | 60.0 | 60.0 | |
| | | Oxime silyl group-containing organopolysiloxane/ surface-untreated silica kneaded material (2) | | | | | | | |
| | | Oxime silyl group-containing organopolysiloxane/ hydrophobic-treated silica kneaded material (3) | | | | | | | |
| | (B) | Poly(acrylamide/acrylic acid) sodium salt (1) | 5.0 | 30.0 | 30.0 | | | | 30.0 |
| | | Poly(acrylamide/acrylic acid) sodium salt (2) | | | | 30.0 | | | |
| | | Polyacrylamide | | | | | 30.0 | 30.0 | |
| | | Polyethylene oxide (1-1) | | | | | | | |
| | | Polyethylene oxide (1-2) | | | | | | | |
| Main agent | | Polyethylene oxide (1-3) | | | | | | | |
| | | Diutan gum | | | | | | | |
| | | Guar gum | | | | | | | |
| | (B') | Polyethylene oxide (2) | | | | | | | |
| | (D) | Ether-modified organopolysiloxane | | | | | | | |
| | | Phenyl-modified organopolysiloxane | | | | | | | |
| | (E) | Copper pyrithione | | | | | | 5.0 | |
| | (F) | Organosilane partial condensate | | | | | | | |
| | (J) | Zinc oxide | | | | | | | |
| | | Talc | | | | | | | |
| | (K) | Xylene | 20.0 | 30.0 | 30.0 | 30.0 | 30.0 | 30.0 | 10.0 |
| | (L) | Amide wax | | | | | | | |
| | (M) | 3-(2-Aminoethylamino)propyltrimethoxysilane | | | | | | | |
| | (N) | Acrylic resin | | | | | | | |
| | Subtotal of main agent components (parts by mass) | | 85.0 | 120.0 | 120.0 | 120.0 | 120.0 | 125.0 | 95.0 |
| Curing agent | (D) | Ether-modified organopolysiloxane | | | 10.0 | 10.0 | 10.0 | 10.0 | 10.0 |
| | | Phenyl-modified organopolysiloxane | | | | | | | |
| | (F) | Organosilane partially hydrolyzed condensate | 3.0 | 3.0 | 3.0 | 3.0 | 3.0 | 3.0 | 3.0 |
| | (G) | Dibutyltin dilaurate | 0.6 | 0.6 | 0.6 | 0.6 | 0.6 | 0.6 | 0.6 |
| | (K) | Acetyl acetone | 5.4 | 5.4 | 5.4 | 5.4 | 5.4 | 5.4 | 5.4 |
| | | Xylene | 3.0 | 3.0 | 3.0 | 3.0 | 3.0 | 3.0 | 3.0 |
| | Subtotal of curing agent components (parts by mass) | | 12.0 | 12.0 | 22.0 | 22.0 | 22.0 | 22.0 | 22.0 |
| Additive | (K) | Xylene | 4.9 | 4.9 | 4.9 | 4.9 | 4.9 | 4.9 | 4.9 |
| | (M) | 3-(2-Aminoethylamino)propyltrimethoxysilane | 0.1 | 0.1 | 0.1 | 0.1 | 0.1 | 0.1 | 0.1 |
| | Subtotal of additive components (parts by mass) | | 5.0 | 5.0 | 5.0 | 5.0 | 5.0 | 5.0 | 5.0 |
| Total (parts by mass) | | | 102.0 | 137.0 | 147.0 | 147.0 | 147.0 | 152.0 | 122.0 |
| Content of component (A) in coating composition (% by mass) | | | 53.5 | 39.8 | 37.1 | 37.1 | 37.1 | 35.9 | 45.1 |
| Content of component (B) in coating composition (% by mass) | | | 4.9 | 21.9 | 20.4 | 20.4 | 20.4 | 19.7 | 24.6 |
| Content of solid contents in coating composition (% by mass) | | | 65.6 | 67.1 | 69.3 | 69.3 | 69.3 | 70.3 | 79.4 |
| Content of component (B) in solid contents (% by mass) | | | 7.5 | 32.6 | 29.4 | 29.4 | 29.4 | 28.1 | 31.0 |
| Results | Frictional resistance reduction ratio (%) | | 47 | 63 | 67 | 68 | 66 | 66 | 67 |
| | Coating film state | | Normal | Normal | Normal | Normal | Normal | Normal | Normal |

**Table 6**

| | | | Example | | | | | | |
|---|---|---|---|---|---|---|---|---|---|
| | | | 8 | 9* | 10* | 11* | 12 | 13 | 14 |
| | (A) & (C) | Silanol group-containing organopolysiloxane/ hydrophobic-treated silica kneaded material (1) | 60.0 | 60.0 | 60.0 | 60.0 | 60.0 | 60.0 | |
| | | Oxime silyl group-containing organopolysiloxane/ surface-untreated silica kneaded material (2) | | | | | | | 42.0 |
| | | Oxime silyl group-containing organopolysiloxane/ hydrophobic-treated silica kneaded material (3) | | | | | | | 13.0 |
| | (B) | Poly(acrylamide/acrylic acid) sodium salt (1) | | | | | | | |
| | | Poly(acrylamide/acrylic acid) sodium salt (2) | | | | | | | |
| | | Polyacrylamide | 30.0 | | | | | | 30.0 |
| | | Polyethylene oxide (1-1) | | 30.0 | | | | | |
| | | Polyethylene oxide (1-2) | | | 30.0 | | | | |
| | | Polyethylene oxide (1-3) | | | | 30.0 | | | |
| Main agent | | Diutan gum | | | | | 30.0 | | |
| | | Guar gum | | | | | | 30.0 | |
| | (B') | Polyethylene oxide (2) | | | | | | | |
| | (D) | Ether-modified organopolysiloxane | | | | | | | 3.0 |
| | | Phenyl-modified organopolysiloxane | | | | | | | 7.0 |
| | (E) | Copper pyrithione | | | | | | | |
| | (F) | Organosilane partial condensate | | | | | | | 0.5 |
| | (J) | Zinc oxide | | | | | | | |
| | | Talc | | | | | | | |
| | (K) | Xylene | 30.0 | 30.0 | 30.0 | 30.0 | 30.0 | 30.0 | 24.4 |
| | (L) | Amide wax | | | | | | | |
| | (M) | 3-(2-Aminoethylamino)propyltrimethoxysilane | | | | | | | 0.1 |
| | (N) | Acrylic resin | | | | | | | |
| | Subtotal of main agent components (parts by mass) | | 120.0 | 120.0 | 120.0 | 120.0 | 120.0 | 120.0 | 120.0 |
| Curing agent | (D) | Ether-modified organopolysiloxane | | 10.0 | 10.0 | 10.0 | 10.0 | 10.0 | |
| | | Phenyl-modified organopolysiloxane | 10.0 | | | | | | |
| | (F) | Organosilane partially hydrolyzed condensate | 3.0 | 3.0 | 3.0 | 3.0 | 3.0 | 3.0 | |
| | (G) | Dibutyltin dilaurate | 0.6 | 0.6 | 0.6 | 0.6 | 0.6 | 0.6 | |
| | (K) | Acetyl acetone | 5.4 | 5.4 | 5.4 | 5.4 | 5.4 | 5.4 | |
| | | Xylene | 3.0 | 3.0 | 3.0 | 3.0 | 3.0 | 3.0 | |
| | Subtotal of curing agent components (parts by mass) | | 22.0 | 22.0 | 22.0 | 22.0 | 22.0 | 22.0 | |
| Additive | (K) | Xylene | 4.9 | 4.9 | 4.9 | 4.9 | 4.9 | 4.9 | |
| | (M) | 3-(2-Aminoethylamino)propyltrimethoxysilane | 0.1 | 0.1 | 0.1 | 0.1 | 0.1 | 0.1 | |
| | Subtotal of additive components (parts by mass) | | 5.0 | 5.0 | 5.0 | 5.0 | 5.0 | 5.0 | |
| Total (parts by mass) | | | 147.0 | 147.0 | 147.0 | 147.0 | 147.0 | 147.0 | 120.0 |
| Content of component (A) in coating composition (% by mass) | | | 37.1 | 37.1 | 37.1 | 37.1 | 37.1 | 37.1 | 41.7 |
| Content of component (B) in coating composition (% by mass) | | | 20.4 | 20.4 | 20.4 | 20.4 | 20.4 | 20.4 | 25.0 |
| Content of solid contents in coating composition (% by mass) | | | 69.3 | 69.3 | 69.3 | 69.3 | 69.3 | 69.3 | 79.4 |
| Content of component (B) in solid contents (% by mass) | | | 29.4 | 29.4 | 29.4 | 29.4 | 29.4 | 29.4 | 31.5 |
| Results | Frictional resistance reduction ratio (%) | | 64 | 67 | 60 | 48 | 16 | 12 | 65 |
| | Coating film state | | Normal | Normal | Normal | Normal | Normal | Normal | Normal |

| | | | | | | | | | |
|---|---|---|---|---|---|---|---|---|---|
| * Reference Example | | | | | | | | | |

**Table 7**

| | | | Comparative Example | | | |
|---|---|---|---|---|---|---|
| | | | 1 | 2 | 3 | 4 |
| | (A) & (C) | Silanol group-containing organopolysiloxane/ hydrophobic-treated silica kneaded material (1) | 60.0 | 60.0 | 60.0 | |
| | | Oxime silyl group-containing organopolysiloxane/ surface-untreated silica kneaded material (2) | | | | |
| | | Oxime silyl group-containing organopolysiloxane/ hydrophobic-treated silica kneaded material (3) | | | | |
| | (B) | Poly(acrylamide/acrylic acid) sodium salt (1) | | | | |
| | | Poly(acrylamide/acrylic acid) sodium salt (2) | | | | |
| | | Polyacrylamide | | | | |
| | | Polyethylene oxide (1-1) | | | | 5.0 |
| | | Polyethylene oxide (1-2) | | | | |
| | | Polyethylene oxide (1-3) | | | | |
| Main agent | | Diutan gum | | | | |
| | | Guar gum | | | | |
| | (B') | Polyethylene oxide (2) | | | 30.0 | |
| | (D) | Ether-modified organopolysiloxane | | | | |
| | | Phenyl-modified organopolysiloxane | | | | |
| | (E) | Copper pyrithione | | | | |
| | (F) | Organosilane partial condensate | | | | |
| | (J) | Zinc oxide | | | | 20.0 |
| | | Talc | | | | 15.0 |
| | (K) | Xylene | 20.0 | 20.0 | 20.0 | 38.0 |
| | (L) | Amide wax | | | | 2.0 |
| | (M) | 3-(2-Aminoethyl)aminopropyltrimethoxysilane | | | | |
| | (N) | Acrylic resin | | | | 20.0 |
| | Subtotal of main agent components (parts by mass) | | 80.0 | 80.0 | 110.0 | 100.0 |
| Curing agent | (D) | Ether-modified organopolysiloxane | | 10.0 | | |
| | | Phenyl-modified organopolysiloxane | | | | |
| | (F) | Organosilane partially hydrolyzed condensate | 3.0 | 3.0 | 3.0 | |
| | (G) | Dibutyltin dilaurate | 0.6 | 0.6 | 0.6 | |
| | (K) | Acetyl acetone | 5.4 | 5.4 | 5.4 | |
| | | Xylene | 3.0 | 3.0 | 3.0 | |
| | Subtotal of curing agent components (parts by mass) | | 12.0 | 22.0 | 12.0 | |
| Additive | (K) | Xylene | 4.9 | 4.9 | 4.9 | |
| | (M) | 3-(2-Aminoethylamino)propyltrimethoxysilane | 0.1 | 0.1 | 0.1 | |
| | Subtotal of additive components (parts by mass) | | 5.0 | 5.0 | 5.0 | |
| Total (parts by mass) | | | 97.0 | 107.0 | 127.0 | 100.0 |
| Content of component (A) in coating composition (% by mass) | | | 56.2 | 51.0 | 43.0 | 0.0 |
| Content of component (B) in coating composition (% by mass) | | | 0.0 | 0.0 | 23.6 | 5.0 |
| Content of solid contents in coating composition (% by mass) | | | 63.8 | 67.2 | 72.4 | 60.4 |
| Content of component (B) in solid contents (% by mass) | | | 0.0 | 0.0 | 32.6 | 8.3 |
| Results | Frictional resistance reduction ratio (%) | | 0 | 0 | 1 | 40 |
| | Coating film state | | Normal | Normal | Normal | Abnormal |

As is clear from the results of the Examples, Reference Examples and Comparative Examples, according to the coating composition of the present invention, it is possible to form a coating film in which in a structure to be propelled underwater, a structure disposed underwater, and so on, the frictional resistance generated between the surface of the structure and water can be thoroughly reduced, and which is excellent in stability.

### Industrial Applicability

In a structure to be propelled underwater, a structure disposed underwater, and so on, by providing a coating film prepared by curing the coating composition for forming a frictional resistance reducing coating film of the present invention on the surface of the structure, the frictional resistance generated between the surface of the structure and water can be thoroughly reduced, and the coating film is excellent in stability. Accordingly, the coating composition of the present invention is able to form a frictional resistance reducing coating film on the surface of a structure to be propelled underwater, such as a ship, etc., a structure disposed underwater, and so on, and on the inner surface of a tubular structure, such as a pipeline, etc.

## Claims

1. A coating composition for forming a frictional resistance reducing coating film, comprising a curable organopolysiloxane (A) and at least one hydrophilic polymer (B) which has a weight average molecular weight (Mw) of 200,000 or more and is selected from the group consisting of a hydrophilic synthetic polymer (B1) and a hydrophilic naturally-derived polymer (B2),
wherein the hydrophilic naturally-derived polymer (B2) is at least one selected from the group consisting of guar gum, tara gum, locust bean gum, xanthan gum, welan gum, diutan gum, γ-polyglutamic acid and salts thereof, hydroxypropyl cellulose (HPC), hydroxyethyl methyl cellulose (HEMC), hydroxypropyl methyl cellulose (HPMC), and carboxymethyl cellulose (CMC), and
wherein the weight average molecular weight (Mw) of the hydrophilic synthetic polymer (B1) is 3,000,000 or more.

2. The coating composition according to claim 1, wherein the hydrophilic synthetic polymer (B1) is a homopolymer having a structural unit derived from one hydrophilic group-containing unsaturated monomer or a copolymer having structural units derived from two or more hydrophilic group-containing unsaturated monomers.

3. The coating composition according to claim 2, wherein the hydrophilic group-containing unsaturated monomer is at least one selected from the group consisting of a nonionic group-containing unsaturated monomer, an anionic group-containing unsaturated monomer, and a cationic group-containing unsaturated monomer.

4. The coating composition according to claim 1, wherein the hydrophilic synthetic polymer (B1) is polyethylene oxide.

5. The coating composition according to any of claims 1 to 4, wherein the weight average molecular weight (Mw) of the hydrophilic naturally-derived polymer (B2) is 500,000 or more.

6. The coating composition according to any of claims 1 to 5, wherein the content of the curable organopolysiloxane (A) in the coating composition is 30 to 70% by mass.

7. The coating composition according to any of claims 1 to 6, wherein the content of the hydrophilic polymer (B) in the solid contents of the coating composition is 5 to 40% by mass.

8. The coating composition according to any of claims 1 to 7, further comprising an inorganic filler (C).

9. The coating composition according to claim 8, wherein the inorganic filler (C) is silica, and the silica is contained as a kneaded material with the curable organopolysiloxane (A).

10. The coating composition according to any of claims 1 to 9, further comprising a silicone oil (D).

11. The coating composition according to any of claims 1 to 10, further comprising an antifouling agent (E).

12. A frictional resistance reducing coating film produced by curing the coating composition according to any of claims 1 to 11.

13. A substrate with a coating film, comprising the frictional resistance reducing coating film according to claim 12 on a substrate.

## Patentansprüche

1. Beschichtungszusammensetzung zur Bildung eines den Reibungswiderstand verringernden Beschichtungsfilms, umfassend ein härtbares Organopolysiloxan (A) und mindestens ein hydrophiles Polymer (B), das ein gewichtsgemitteltes Molekulargewicht (Mw) von 200.000 oder mehr aufweist und aus der Gruppe, bestehend aus einem hydrophilen synthetischen Polymer (B1) und einem hydrophilen natürlichen Polymer (B2), ausgewählt ist,
wobei das hydrophile natürliche Polymer (B2) mindestens eines, ausgewählt aus der Gruppe, bestehend aus Guargummi, Tarakernmehl, Johannisbrotkernmehl, Xanthangummi, Welangummi, Diutangummi, γ-Polyglutaminsäure und Salzen davon, Hydroxypropylcellulose (HPC), Hydroxyethylmethylcellulose (HEMC), Hydroxypropylmethylcellulose (HPMC) und Carboxymethylcellulose (CMC), ist und
wobei das gewichtsgemittelte Molekulargewicht (Mw) des hydrophilen synthetischen Polymers (B1) 3.000.000 oder mehr beträgt.

2. Beschichtungszusammensetzung gemäß Anspruch 1, wobei das hydrophile synthetische Polymer (B1) ein Homopolymer mit einer Struktureinheit, die von einem ungesättigten Monomer, das eine hydrophile Gruppe enthält, abgeleitet ist, oder ein Copolymer mit Struktureinheiten, die von zwei oder mehreren ungesättigten Monomeren, die eine hydrophile Gruppe enthalten, abgeleitet ist, ist.

3. Beschichtungszusammensetzung gemäß Anspruch 2, wobei das ungesättigte Monomer, das eine hydrophile Gruppe enthält, mindestens eines, ausgewählt aus der Gruppe, bestehend aus einem ungesättigten Monomer, das eine nicht-ionische Gruppe enthält, einem ungesättigten Monomer, das eine anionische Gruppe enthält, und einem ungesättigten Monomer, das eine kationische Gruppe enthält, ist.

4. Beschichtungszusammensetzung gemäß Anspruch 1, wobei das hydrophile synthetische Polymer (B1) Polyethylenoxid ist.

5. Beschichtungszusammensetzung gemäß irgendeinem der Ansprüche 1 bis 4, wobei das gewichtsgemittelte Molekulargewicht (Mw) des hydrophilen natürlichen Polymers (B2) 500.000 oder mehr beträgt.

6. Beschichtungszusammensetzung gemäß irgendeinem der Ansprüche 1 bis 5, wobei der Gehalt des härtbaren Organopolysiloxans (A) in der Beschichtungszusammensetzung 30 bis 70 Masse-% beträgt.

7. Beschichtungszusammensetzung gemäß irgendeinem der Ansprüche 1 bis 6, wobei das hydrophile Polymer (B) in den Feststoffen der Beschichtungszusammensetzung 5 bis 40 Masse-% beträgt.

8. Beschichtungszusammensetzung gemäß irgendeinem der Ansprüche 1 bis 7, ferner umfassend einen anorganischen Füllstoff (C).

9. Beschichtungszusammensetzung gemäß Anspruch 8, wobei der anorganische Füllstoff (C) Silika ist und das Silika als mit dem härtbaren Organopolysiloxan (A) geknetetes Material enthalten ist.

10. Beschichtungszusammensetzung gemäß irgendeinem der Ansprüche 1 bis 9, ferner umfassend ein Silikonöl (D).

11. Beschichtungszusammensetzung gemäß irgendeinem der Ansprüche 1 bis 10, ferner umfassend ein Antifoulingmittel (E).

12. Reibungswiderstand-verringernder Beschichtungsfilm, hergestellt durch Härten der Beschichtungszusammensetzung gemäß irgendeinem der Ansprüche 1 bis 11.

13. Substrat mit einem Beschichtungsfilm, umfassend den Reibungswiderstand-verringernden Beschichtungsfilm gemäß Anspruch 12 auf einem Substrat.

## Revendications

1. Composition de revêtement pour la formation d'un film de revêtement réduisant la résistance au frottement, comprenant un organopolysiloxane durcissable (A) et au moins un polymère hydrophile (B) qui présente un poids moléculaire moyen en poids (Mw) supérieur ou égal à 200 000 et est choisi parmi le groupe se composant d'un polymère synthétique hydrophile (B1) et d'un polymère hydrophile d'origine naturelle (B2),
dans laquelle le polymère hydrophile d'origine naturelle (B2) est au moins un choisi parmi le groupe se composant de gomme de guar, gomme tara, gomme de caroube, gomme de xanthane, gomme de welan, gomme de diutane, acide γ-polyglutamique et des sels de ceux-ci, hydroxypropylcellulose (HPC), hydroxyethylméthylcellulose (HEMC), hydroxypropylméthylcellulose (HPMC), et carboxyméthylcellulose (CMC), et
dans laquelle le poids moléculaire moyen en poids (Mw) du polymère synthétique hydrophile (B1) est supérieur ou égal à 3 000 000.

2. Composition de revêtement selon la revendication 1, dans laquelle le polymère synthétique hydrophile (B1) est un homopolymère présentant une unité structurale dérivée d'un monomère insaturé contenant un groupe hydrophile ou un copolymère présentant des unités structurales dérivées de deux monomères insaturés contenant un groupe hydrophile ou plus.

3. Composition de revêtement selon la revendication 2, dans laquelle le monomère insaturé contenant un groupe hydrophile est au moins un choisi parmi le groupe se composant d'un monomère insaturé contenant un groupe non ionique, d'un monomère insaturé contenant un groupe anionique, et d'un monomère insaturé contenant un groupe cationique.

4. Composition de revêtement selon la revendication 1, dans laquelle le polymère synthétique hydrophile (B1) est un oxyde de polyéthylène.

5. Composition de revêtement selon l'une quelconque des revendications 1 à 4, dans laquelle le poids moléculaire moyen en poids (Mw) du polymère hydrophile d'origine naturelle (B2) est supérieur ou égal à 500 000.

6. Composition de revêtement selon l'une quelconque des revendications 1 à 5, dans laquelle la teneur de l'organopolysiloxane durcissable (A) dans la composition de revêtement va de 30 à 70 % en masse.

7. Composition de revêtement selon l'une quelconque des revendications 1 à 6, dans laquelle la teneur du polymère hydrophile (B) dans les teneurs solides de la composition de revêtement va de 5 à 40 % en masse.

8. Composition de revêtement selon l'une quelconque des revendications 1 à 7, comprenant en outre une charge minérale (C).

9. Composition de revêtement selon la revendication 8, dans laquelle la charge minérale (C) est de la silice, et la silice est contenue sous forme de matière malaxée avec l'organopolysiloxane durcissable (A).

10. Composition de revêtement selon l'une quelconque des revendications 1 à 9, comprenant en outre une huile de silicone (D).

11. Composition de revêtement selon l'une quelconque des revendications 1 à 10, comprenant en outre un agent antisalissure (E).

12. Film de revêtement réduisant la résistance au frottement obtenu par durcissement de la composition de revêtement selon l'une quelconque des revendications 1 à 11.

13. Substrat doté d'un film de revêtement, comprenant le film de revêtement réduisant la résistance au frottement selon la revendication 12 sur un substrat.
